# EUROPEAN PATENT SPECIFICATION

(11) **EP 2 113 985 B1**
(45) Date of publication and mention of the grant of the patent: **26.08.2020**
(21) Application number: 08711537.4
(22) Date of filing: 19.02.2008
(51) Int. Cl.: H02K 1/27, F04C 29/00, F04C 23/00, H02K 1/32, H02K 7/14

(54) **MOTOR AND COMPRESSOR**
MOTOR UND VERDICHTER
MOTEUR ET COMPRESSEUR

(30) Priority: 22.02.2007 JP 2007042031
(43) Date of publication of application: 04.11.2009
(73) Proprietor: Daikin Industries, Ltd., Osaka 530-8323 (JP)
(72) Inventor: KOJIMA, Hiroaki, Kusatsu-shi Shiga 525-0044 (JP)
(74) Representative: Goddar, Heinz J.
(86) International application number: PCT/JP2008/052713
(87) International publication number: WO 2008/102753

(56) References cited:
- EP-A2- 1 496 254
- JP-A- 2001 186 701
- JP-A- 2005 192 365
- JP-A- 2006 166 543
- JP-A- 2006 238 678
- JP-A- 2006 238 678
- US-A1- 2005 140 235

## Description

### TECHNICAL FIELD

The present invention relates to a motor of an inner rotor type and a compressor using the motor.

### BACKGROUND ART

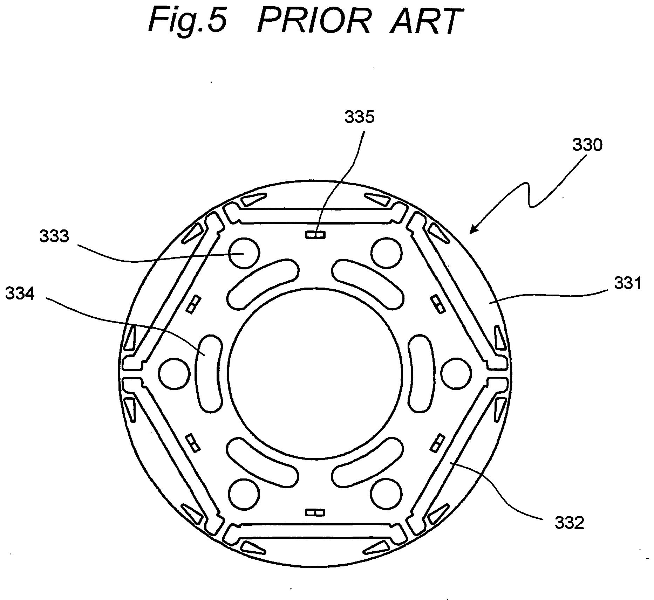

As a first motor, there has conventionally been provided an inner rotor type one including a rotor 330 shown in Fig. 5. The rotor 330 of this motor, as shown in Fig. 5, has a rotor core 331 formed of layered steel sheets, and six permanent magnets 332 embedded in holes formed through the rotor core 331 along its axial direction. In Fig. 5, denoted by reference numeral 335 are caulkings provided in the rotor core 331. The six permanent magnets 332 are arrayed in a regular hexagonal shape along a circumferential direction. Near and radially inside vertices of the regular hexagon formed by the permanent magnets 332, rivets 333 are set through the rotor core 331 so that the layered steel sheets of the rotor core 331 are fixedly sandwiched from axial both sides by end plates (not shown). Then, holes 334 whose cross-sectional shape is curved along the circumferential direction are provided radially further inside the rivets 333 of the rotor core 331 so as to run through the rotor core 331.

In this conventional first motor, when the holes 334 provided in the rotor core 331 are utilized for fluid passages involved in motor cooling or for refrigerant passages involved in applications to compressors, the rivets 333 and the holes 334 are arrayed on lines, respectively, that interconnect the vertices of the regular hexagon formed by the permanent magnets 332 and a center of the rotating shaft. In this case, the rivets 333 and the holes 334, which are placed in a region of high magnetic flux density, obstruct the flow of magnetic flux, causing decreases of torque and efficiency. Further, an attempt to suppress the decreases of torque and efficiency would make it impossible to form large holes, causing difficulty in ensuring enough flow passage cross-sectional area required for the holes 334, as a problem.

As a conventional second motor, there is provided an inner rotor type one including a rotor in which four permanent magnets are arrayed in a square shape along a circumferential direction (see, e.g., Japanese Patent Publication No. 3485877).

This second motor has a rotor core formed of layered steel sheets, and four permanent magnets embedded in holes formed through the rotor core along its axial direction. The four permanent magnets are arrayed in a square shape along a circumferential direction. Near and radially inside central portions of the individual permanent magnets are rivets set through the rotor core. Refrigerant passages extending through the rotor core are provided between the rivets of the rotor core and radially inner than the permanent magnets.

In this conventional second motor, since refrigerant passages alone are arrayed on lines interconnecting the vertices of the square formed by the permanent magnets and a rotating axis center, there does not occur such a problem as would do with the first motor. However, when the rivets are placed near and radially inside the central portions of the permanent magnets, larger distances from the rivets to the outer circumference may cause the rigidity in regions near the outer circumference to decrease, incurring increases in acoustic vibrations. Also, when the rivets are placed near and, conversely, radially outside the central portions of the permanent magnets, the placement of the rivets is in a region of higher magnetic flux density than the placement inside the permanent magnets, so that the flow of magnetic flux is obstructed, resulting in decreases of torque and efficiency. Further, an attempt to suppress the decreases of torque and efficiency would involve reduction of the outer diameter of the rivets, which may cause decreases of the rigidity and, as a result, increases of acoustic vibrations.

JP2001186701 discloses a motor of an inner rotor type according to the preamble of claim 1.

### SUMMARY OF INVENTION

### TECHNICAL PROBLEM

Accordingly, an object of the present invention is to provide a motor of an inner rotor type, as well as a compressor using the same, which is capable of easily ensuring enough flow passage cross-sectional area for fluid passages extending through the rotor along the axial direction with a simple construction without causing decreases of the rigidity or obstructing the flow of magnetic flux.

### SOLUTION TO PROBLEM

In order to achieve the above object, there is provided a motor of an inner rotor type in which a stator is placed so as to surround an outer circumferential side of a rotor, wherein
the rotor comprises:
a rotor core formed of layered electromagnetic steel sheets;
magnets which are embedded in the rotor core along an axial direction and which are placed in a regular polygonal shape along a circumferential direction;
a plurality of holes formed through the rotor core in its axial direction and provided near and radially inside vertices of the regular polygon formed by the magnets;
tightening members inserted through part of the plurality of holes to tighten the rotor core; and
fluid passages provided between the holes of the rotor core so as to extend through the rotor core in the axial direction wherein holes through which no tightening members are inserted form fluid passages.

According to this invention, in the inner rotor type motor in which a plurality of holes formed through the rotor core made of layered electromagnetic steel sheets in the axial direction are provided near and radially inside vertices of a generally regular hexagon formed by the magnets embedded in the rotor core, and in which tightening members inserted through part of the plurality of holes are set so as to extend through the rotor core in the axial direction to tighten the rotor core, fluid passages extending through the rotor core in the axial direction are provided in a region of less magnetic flux between holes of the rotor core, thus making it achievable to ensure fluid passages having a large flow passage cross-sectional area without obstructing the flow of magnetic flux. As a result, decreases of torque and efficiency can be suppressed without obstructing the flow of magnetic flux, and moreover since the rotor core is tightened by the tightening members on its outer circumferential side, it becomes possible to enhance the rigidity of the rotor as well. Thus, it becomes achievable, with an inner rotor type motor, to easily ensure enough flow passage cross-sectional area for the fluid passages extending through the rotor in the axial direction with a simple construction without decreasing the rigidity as well as without obstructing the flow of magnetic flux. Consequently, motor cooling efficiency can be improved with the use of the fluid passages. Moreover, by using this motor for a compressor with the fluid passages utilized as refrigerant passages, the passage resistance can be reduced while increases in oil level can be prevented.

In one embodiment of the invention, the fluid passages through the rotor core are provided radially inside central portions of sides of the generally regular polygon formed by the magnets.

According to this embodiment, by providing fluid passages through the rotor core radially inside central portions of sides of the generally regular polygon formed by the magnets, it becomes achievable to ensure large refrigerant passages.

In one embodiment of the invention, a radial length between an inner side of the rotor core and the fluid passages is shorter than a radial length between the magnets and the fluid passages.

According to this embodiment, by the setting that the radial length between the inner side of the rotor core and the fluid passages is shorter than the radial length between the magnets and the fluid passages, it becomes achievable to form the fluid passages in a region closer to the center of the rotor, i.e., a region in which the flow of magnetic flux is less obstructed, making it possible to effectively suppress decreases of torque and efficiency.

In one embodiment of the invention, a compressor comprising:
the above motor; and
a compression mechanism section which is driven by the motor.

According to this invention, with the use of an inner rotor type motor that makes it possible to easily ensure enough flow passage cross-sectional area of the fluid passages extending through the rotor in the axial direction with a simple construction, it becomes achievable to reduce the passage resistance of the refrigerant passages and moreover to prevent increases in oil level.

### ADVANTAGEOUS EFFECTS OF INVENTION

As apparent from the above description, according to the motor of the invention, there can be realized an inner rotor type motor capable of easily ensuring enough flow passage cross-sectional area for the fluid passages extending through the rotor in the axial direction with a simple construction without decreasing the rigidity as well as without obstructing the flow of magnetic flux.

Also, according to the motor of one embodiment, by providing fluid passages through the rotor core radially inside central portions of magnets, it becomes achievable to ensure large refrigerant passages.

Also, according to the motor of one embodiment, by the setting that the radial length between the inner side of the rotor core and the fluid passages is shorter than the radial length between the magnets and the fluid passages, it becomes achievable to form the fluid passages in a region closer to the center of the rotor, i.e., a region in which the flow of magnetic flux is less obstructed, making it possible to effectively suppress decreases of torque and efficiency.

Also, according to the compressor of this invention, by using the motor described above, it becomes achievable to reduce the passage resistance of the refrigerant passages and moreover to prevent increases in oil level.

### BRIEF DESCRIPTION OF DRAWINGS

Fig. 1A is a top view of a rotor of a motor according to a first embodiment of the invention;
Fig. 1B is a top view showing a state in which end plates are fitted to a rotor core of the rotor;
Fig. 2 is a longitudinal sectional view of a rotary compressor including the motor and a compression mechanism section;
Fig. 3 is a top view of a rotor of a motor according to a second embodiment of the invention;
Fig. 4 is a top view of a rotor of a motor according to a third embodiment of the invention; and
Fig. 5 is a top view of a rotor of a conventional motor.

### DESCRIPTION OF EMBODIMENTS

Hereinbelow, a motor of the present invention will be described in detail by way of embodiments thereof illustrated in the accompanying drawings.

### (First Embodiment)

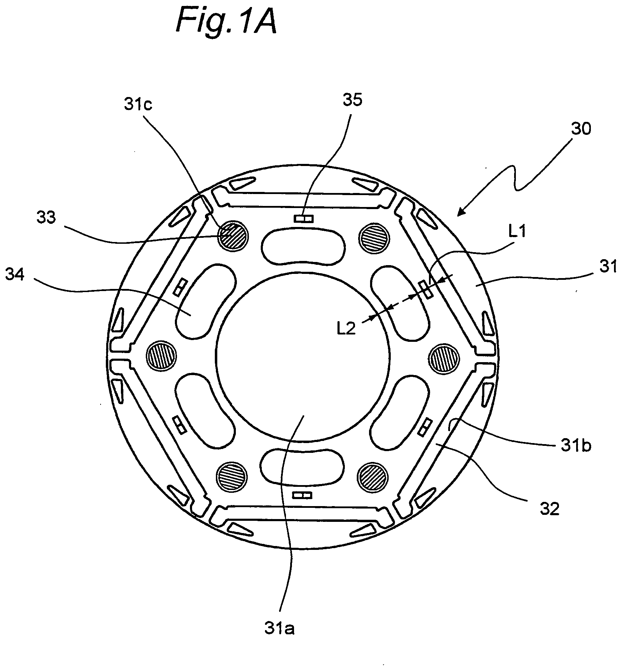

Fig. 1A shows a top view of a rotor 30 of a motor according to an exemplary first embodiment not forming part of the present invention.

The rotor 30 of this motor, as shown in Fig. 1A, includes: a rotor core 31 formed of layered electromagnetic steel sheets; six permanent magnets 32 which are embedded respectively in embedding holes 31b formed through the rotor core 31 along an axial direction and which are placed in a generally regular hexagonal shape along a circumferential direction; six holes 31c which are provided near and radially inside vertices of the regular hexagon formed by the permanent magnets 32 of the rotor core 31 and which are formed through the rotor core 31 in the axial direction; rivets 33 as an example of tightening members which are inserted through the six holes 31c, respectively, to tighten the rotor core 31; and through holes 34 as an example of fluid passages which are provided between the rivets 33 of the rotor core 31 so as to be formed through the rotor core 31 in the axial direction. The rotor core 31 is formed into a cylindrical shape having in its center a circular hole 31a into which a rotating shaft (not shown) is to be inserted. Caulking portions 35 are provided between a central portion of each permanent magnet 32 of the rotor core 31 and a through hole 34 neighboring the permanent magnet 32. By these caulking portions 35, a plurality of electromagnetic steel sheets are fixedly set in their layering direction.

The through holes 34 are placed radially inside central portions, respectively, of individual sides of the generally regular hexagon formed by the permanent magnets 32. Also, the through holes 34 each have an opening shape which is an elongate hole shape curved along the circumferential direction, where a radial length L2 between an inner side of the rotor core 31 and the through holes 34 is set shorter than a radial length L1 between the permanent magnets 32 and the through holes 34.

According to the inner rotor type motor constructed as described above, by the arrangement that the through holes 34 formed through the rotor core 31 in the axial direction are provided in a region of less magnetic flux between the holes 31c of the rotor core 31, it becomes achievable to ensure, as fluid passages, through holes 34 having a large flow passage cross-sectional area without obstructing the flow of magnetic flux. As a result, decreases of torque and efficiency can be suppressed without obstructing the flow of magnetic flux, while the tightening of the rotor core 31 with the rivets 33 on the outer circumferential side makes it possible to enhance the rigidity of the rotor 30 as well. Thus, it becomes achievable, with an inner rotor type motor, to easily ensure enough flow passage cross-sectional area for the through holes 34 formed through the rotor 30 in the axial direction with a simple construction without obstructing the flow of magnetic flux. Consequently, motor cooling efficiency with the use of the through holes 34 can be improved. Moreover, by using this motor for a compressor with the fluid passages (through holes 34) utilized as refrigerant passages, the passage resistance can be reduced while increases in oil level can be prevented.

Also, by the through holes 34 serving as fluid passages provided radially inside central portions of sides of the generally regular hexagon formed by the permanent magnets 32 of the rotor core 31, it becomes achievable to ensure even larger refrigerant passages.

Furthermore, by the setting that the radial length between the inner side of the rotor core 31 and the through holes 34 is shorter than the radial length between the permanent magnets 32 and the through holes 34, it becomes achievable to form the through holes 34 in a region closer to central portion of the rotor 30, i.e., a region in which the flow of magnetic flux is less obstructed, so that decreases of torque and efficiency can be suppressed effectively.

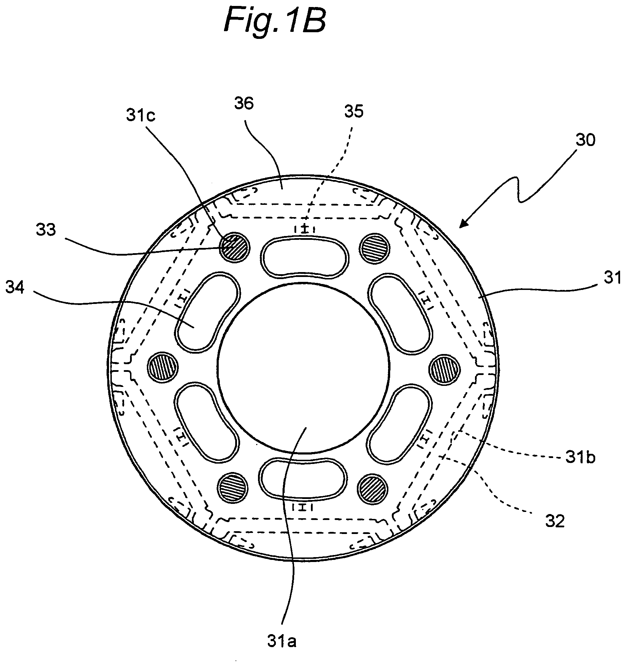

Fig. 1B shows a state in which end plates 36 are fitted to the rotor core 31 of the rotor 30. As shown in Fig. 1B, layered steel sheets of the rotor core 31 are fixedly sandwiched from axial both sides by using the end plates 36.

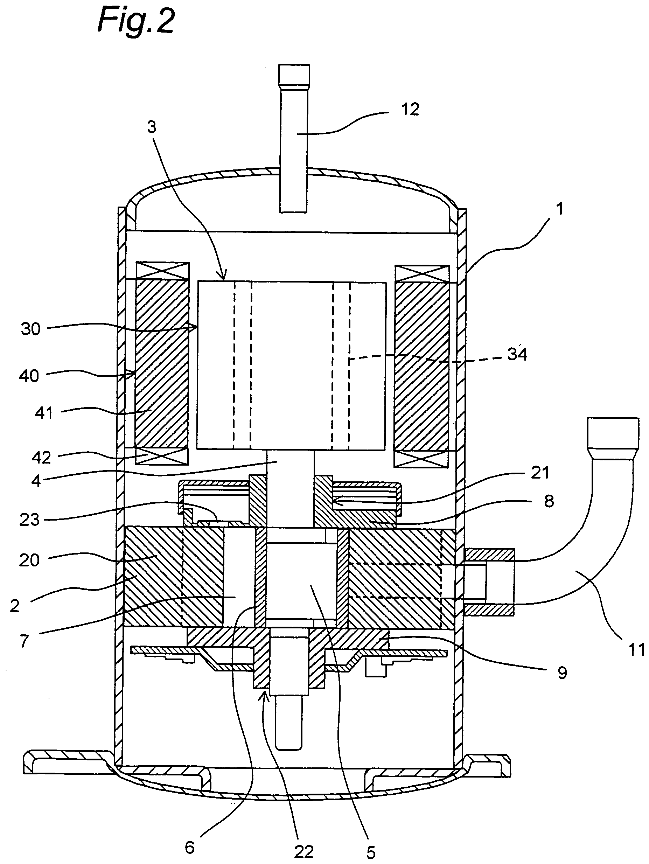

Fig. 2 shows a longitudinal sectional view of a rotary compressor including the motor and a compression mechanism section.

This compressor, as shown in Fig. 2, includes a closed container 1, a compression mechanism section 2 placed within the closed container 1, and an inner rotor type motor 3 which is placed within the closed container 1 and upward of the compression mechanism section 2 and which drives the compression mechanism section 2 via a rotating shaft 4.

An intake pipe 11 is connected to a lower side portion of the closed container 1, while a discharge pipe 12 is connected to an upper side of the closed container 1. Refrigerant gas supplied through the intake pipe 11 is led to the intake side of the compression mechanism section 2.

The motor 3 is placed in a high-pressure region within the closed container 1 which is to be filled with high-pressure refrigerant gas discharged from the compression mechanism section 2.

The motor 3 has a cylindrical-shaped rotor 30 fixed to the rotating shaft 4, and a stator 40 placed radially opposite to the outer circumferential side of the rotor 30 with an air gap provided therebetween. The stator 40 has a stator core 41, and a coil 42 wound around the stator core 41. This rotor 30 is the rotor 30 shown in Figs. 1A and 1B.

The compression mechanism section 2, as shown in Fig. 2, includes a cylinder-like body portion 20, and upper end plate 8 and lower end plate 9 fitted to upper and lower opening ends, respectively, of the body portion 20. The rotating shaft 4 is inserted inside the body portion 20 through the upper end plate 8 and the lower end plate 9. The rotating shaft 4 is rotatably supported by a bearing 21 provided on the upper end plate 8 of the compression mechanism section 2 and a bearing 22 provided on the lower end plate 9 of the compression mechanism section 2. A crankpin 5 is provided on the rotating shaft 4 within the body portion 20. A compression chamber 7 defined by a piston 6, which is fitted to and driven by the crankpin 5, and a cylinder corresponding to the piston 6 works for doing compression. The piston 6 rotates in an eccentric state or revolves around to make the compression chamber 7 varied in capacity.

According to the compressor constructed as shown above, by using the motor 3 having the rotor 30 shown in Figs. 1A and 1B, it becomes achievable to reduce the passage resistance of the through holes 34 serving as refrigerant passages and moreover to prevent increases in oil level.

### (Second Embodiment)

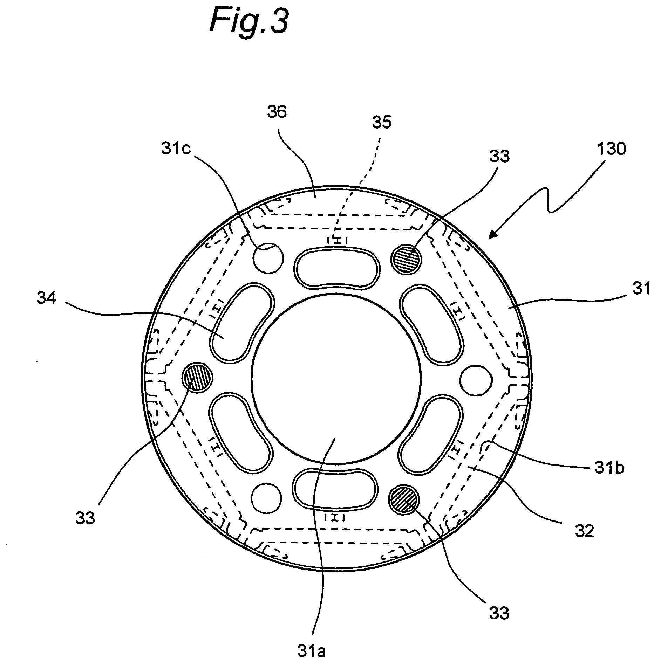

Fig. 3 shows a top view of a rotor 130 of a motor according to a second embodiment of the invention. The rotor 130 of the motor in this second embodiment is similar, except rivets, to the rotor 30 of the motor of the first embodiment. Therefore, like components are designated by like reference numerals and their description is omitted.

In the rotor 130 of this motor, as shown in Fig. 3, rivets 33 as an example of tightening members are inserted through every other one out of six holes 31c. The rotor core 31 is tightened by three rivets 33 with layered steel sheets of the rotor core 31 sandwiched from axial both sides by using the end plates 36. Then, the remaining three holes 31c with no rivets 33 inserted therethrough are utilized as fluid passages. It is to be noted that the holes 31c for the rivets 33, if too small, would make it impossible to insert the rivets 33 therethrough, and if too large, would cause decrease in frictional force at end portions of the rivets 33, resulting in insufficient tightening power. Therefore, the rivets 33 need to be so sized as to allow a successful tightening.

The motor of the second embodiment has the same effects as the motor of the first embodiment. Also, by using a motor having the rotor 130 shown in Fig. 3 for a compressor, it becomes achievable to reduce the passage resistance of the through holes serving as refrigerant passages and moreover to prevent increases in oil level.

### (Third Embodiment)

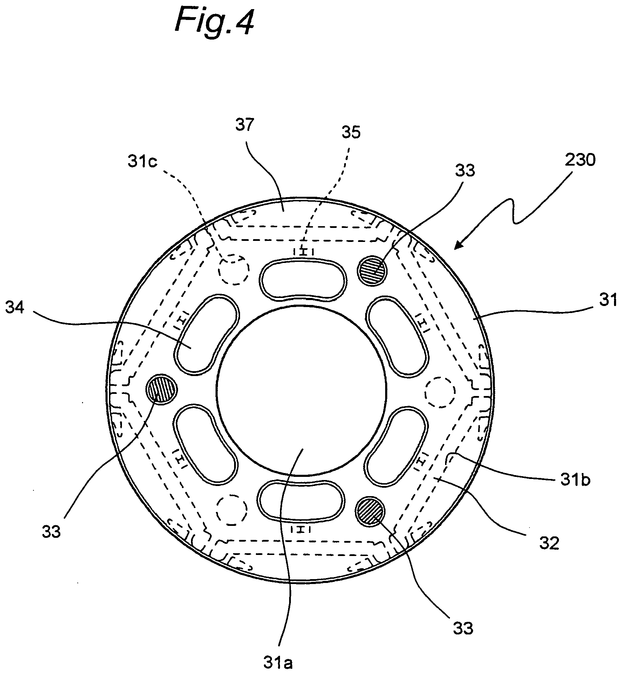

Fig. 4 shows a top view of a rotor 230 of a motor of a third embodiment not forming part of the present invention. The rotor 230 of the motor in this third embodiment is similar, except rivets and end plates, to the rotor 30 of the motor of the first embodiment. Therefore, like components are designated by like reference numerals and their description is omitted.

In the rotor 230 of this motor, as shown in Fig. 3, rivets 33 as an example of tightening members are inserted through every other one out of six holes 31c. The rotor core 31 is tightened by three rivets 33 with layered steel sheets of the rotor core 31 sandwiched from axial both sides by using end plates 37. Then, the remaining three holes 31c with no rivets 33 inserted therethrough are blocked by the end plates 37. It is to be noted that the holes 31c for the rivets 33, if too small, would make it impossible to insert the rivets 33 therethrough, and if too large, would cause decreases in frictional force at end portions of the rivets 33, resulting in insufficient tightening power. Therefore, the rivets 33 need to be so sized as to allow a successful tightening.

In this case, by the three holes 31c that are provided with no rivets 33 inserted therethrough, there occurs no magnetic imbalance with the three holes 31c with the rivets 33 inserted therethrough. Thus, it becomes achievable to prevent decreases of torque and efficiency, so that increases in acoustic vibrations can be suppressed.

The motor of the third embodiment has the same effects as the motor of the first embodiment. Also, by using a motor having the rotor 230 shown in Fig. 4 for a compressor, it becomes achievable to reduce the passage resistance of the through holes serving as refrigerant passages and moreover to prevent increases in oil level.

The first to third embodiments have been described on a case in which six permanent magnets 32 are placed in a generally regular hexagonal shape along the circumferential direction in the rotor core 31. However, without limitation to this, the invention may also be applied to motors in which magnets are placed in a generally regular polygonal shape such as a square shape along the circumferential direction.

Also in the first to third embodiments, the openings of the through holes 34 as refrigerant passages are formed each into an elongate hole shape curved along the circumferential direction. However, size and shape of the refrigerant passages are not limited to this, and the individual refrigerant passages may be formed in different sizes and shapes.

Furthermore, although the first embodiment has been described about a rotary compressor, the invention may also be applied to compressors of other constructions such as scroll compressors.

Although the first to third embodiments have been described about compressors using the motor of the invention, the invention may also be applied to devices equipped with other driven parts for the motor without being limited to compressors.

## Claims

1. A motor of an inner rotor type in which a stator (40) is placed so as to surround an outer circumferential side of a rotor (30), wherein
the rotor (30) comprises:
a rotor core (31) formed of layered electromagnetic steel sheets;
magnets (32) which are embedded in the rotor core (31) along an axial direction;
a plurality of holes (31c) formed through the rotor core (31) in its axial direction;
tightening members (33) inserted through part of the plurality of holes (31c) to tighten the rotor core (31);
fluid passages (34) provided between the holes (31c) of the rotor core (31) so as to extend through the rotor core (31) in the axial direction; **characterized in that** the magnets are placed in a regular polygonal shape along a circumferential direction, **in that** the plurality of holes are provided near and radially inside vertices of the regular polygon formed by the magnets and **in that** holes (31c) through which no tightening members (33) are inserted form fluid passages.

2. The motor as claimed in Claim 1, wherein
the fluid passages (34) through the rotor core (31) are provided radially inside central portions of sides of the generally regular polygon formed by the magnets (32).

3. The motor as claimed in Claim 1 or 2, wherein
a radial length between an inner side of the rotor core (31) and the fluid passages (34) is shorter than a radial length between the magnets (32) and the fluid passages (34).

4. A compressor comprising:
a motor (3) as defined in any one of Claims 1 to 3; and
a compression mechanism section (2) which is driven by the motor (3).

## Patentansprüche

1. Ein Motor eines Innenrotortyps, bei dem ein Stator (40) so angeordnet ist, dass er eine äußere Umfangsseite eines Rotors (30) umgibt, wobei der Rotor (30) umfasst:
einen Rotorkern (31), der aus geschichteten elektromagnetischen Stahlblechen gebildet ist;
Magnete (32), die entlang einer axialen Richtung in den Rotorkern (31) eingebettet sind;
eine Vielzahl von Löchern (31c), die durch den Rotorkern (31) in seiner axialen Richtung ausgebildet sind;
Spannelemente (33), die durch einen Teil der Vielzahl von Löchern (31c) eingesetzt sind, um den Rotorkern (31) zu spannen;
Fluidpassagen (34), die zwischen den Löchern (31c) des Rotorkerns (31) vorgesehen sind, so dass sie sich durch den Rotorkern (31) in der axialen Richtung erstrecken;
**dadurch gekennzeichnet, dass** die Magnete in einer regelmäßigen polygonalen Form entlang einer Umfangsrichtung angeordnet sind, dass die Mehrzahl von Löchern in der Nähe und radial innerhalb von Scheitelpunkten des regelmäßigen Polygons, das von den Magneten gebildet wird, angeordnet sind, und dadurch, dass Löcher (31c), in die keine Spannelemente (33) eingesetzt sind, Fluidpassagen bilden.

2. Motor wie in Anspruch 1 beansprucht, wobei die Fluidpassagen (34) durch den Rotorkern (31) radial innerhalb der zentralen Teile der Seiten des im Allgemeinen regelmäßigen Polygons, das von den Magneten gebildet wird (32), vorgesehen sind.

3. Motor nach Anspruch 1 oder 2, bei dem eine radiale Länge zwischen einer Innenseite des Rotorkerns (31) und den Fluidpassagen (34) kürzer als eine radiale Länge zwischen den Magneten (32) und den Fluidpassagen (34) ist.

4. Ein Kompressor mit:
einem Motor (3) nach einem der Ansprüche 1 bis 3; und
einen Kompressionsmechanismusabschnitt (2), der durch den Motor (3) angetrieben ist.

## Revendications

1. Moteur d'un type à rotor interne, dans lequel un stator (40) est placé de façon à entourer un côté circonférentiel extérieur d'un rotor (30), dans lequel
le rotor (30) comprend :
un noyau de rotor (31) composé de tôles d'acier électromagnétiques stratifiées ;
des aimants (32) encastrés dans le noyau de rotor (31) le long d'une direction axiale ;
une pluralité d'orifices (31c) pratiqués à travers le noyau de rotor (31) dans sa direction axiale ;
des éléments de serrage (33) insérés dans une partie de la pluralité d'orifices (31c) pour serrer le noyau de rotor (31) ;
des passages de fluide (34) pratiqués entre les orifices (31c) du noyau de rotor (31) de façon à se prolonger dans la direction axiale à travers le noyau de rotor (31) ;
**caractérisé en ce que** les aimants sont placés, avec une forme polygonale régulière, dans une direction circonférentielle, **en ce que** la pluralité d'orifices est placée à proximité, et radialement à l'intérieur, de sommets du polygone régulier formé par les aimants, et **en ce que** des orifices (31c), à travers lesquels aucun élément de serrage (33) n'est inséré, forment des passages de fluide.

2. Moteur selon la revendication 1, dans lequel
les passages de fluide (34) traversant le noyau de rotor (31) sont agencés radialement à l'intérieur de parties centrales de côtés du polygone globalement régulier formé par les aimants (32).

3. Moteur selon la revendication 1 ou 2, dans lequel
une longueur radiale entre un côté intérieur du noyau de rotor (31) et les passages de fluide (34) est plus courte qu'une longueur radiale entre les aimants (32) et les passages de fluide (34).

4. Compresseur, comprenant :
un moteur (3) selon une quelconque des revendications 1 à 3 ; et
une section de mécanisme de compression (2) entraînée par le moteur (3).
